# EUROPEAN PATENT APPLICATION

(11) **EP 4 837 420 A1**
(43) Date of publication of application: **11.11.2026**
(21) Application number: 25175430.5
(22) Date of filing: 09.05.2025
(51) Int. Cl.: A01N 65/10, A01N 65/22, A01N 31/16, A01N 25/06, A01N 49/00, A01P 7/04

(54) **SYNERGISTIC INSECTICIDE COMPOSITIONS AND FORMULATIONS THEREOF**

(71) Applicant: Ross Lifescience USA Inc., Lorton, VA 22079 (US)
(72) Inventor: KSHIRSAGAR, Rajendra Dattu, 411026 Maharashtra (IN); SRINIVASAN, Sridhar, 411026 Maharashtra (IN); NAIR, Pavana, 411026 Maharashtra (IN)
(74) Representative: Prüfer & Partner mbB Patentanwälte · Rechtsanwälte

(57) **Abstract**

The present disclosure provides an insecticide composition for controlling crawling insects, said composition comprising: *Pogostemon cablin* in an amount ranging from 1% to 25% by weight of the composition; Eugenol in an amount ranging from 1% to 30% by weight of the composition; *Pimpinella anisum* in an amount ranging from 1% to 25% by weight of the composition; Citral in an amount ranging from 1% to 30% by weight of the composition; and rest being an excipient. The ingredients of the composition of the present disclosure exhibit functional reciprocity therebetween, and accordingly aid in repelling, reducing, preventing, killing, and/or controlling the population of crawling insects such as cockroaches.

## Description

### Field of the invention

The present disclosure relates generally to the field of insecticide composition. In particular, the present disclosure provides compositions and formulations for controlling various crawling insects. Also provided is a method for controlling crawling insects.

### Background

The cockroach is a common sanitary pest and currently poses a serious infestation problem across India. These insects carry filth on their legs and bodies, potentially spreading diseases by contaminating food. They also cause damage to fabrics, book bindings, and furniture, often by consuming the glue, and are known to destroy stored food materials.

Cockroaches emit an offensive odour, which can render food unpalatable if they come into contact with dishes or food preparation areas. Their presence can also cause significant distress and embarrassment to occupants of infested buildings. With the rising standard of living, effective cockroach control has become a critical aspect of sanitary pest management.

Although numerous devices, agents, compositions, and formulations for cockroach control are reported in the literature and are commercially available, many of these solutions continue to suffer from limitations. These include high costs, limited efficacy, and undesirable side effects such as skin irritation, allergic reactions, discomfort, and even reduced oxygen content in the treated environment.

There is, therefore, a need in the art to develop new and improved compositions/formulations that repel, kill, prevent, reduce, and control the numbers of various indoor and outdoor crawling insects such as cockroaches, and overcome one or more problems associated with the conventional compositions/formulations thereof. The present invention satisfies the existing as well as other needs.

### Summary

The present disclosure addresses these and other unmet deficiencies inherent in the relevant insecticide arts and overcomes them by providing compositions/formulations that exhibit enhanced efficacy and economic significance.

The present disclosure relates to an insecticide composition. Specifically, the present disclosure relates to an insecticide composition for controlling crawling insects, said composition comprising: *Pogostemon cablin* in an amount ranging from 1% to 25% by weight of the composition; Eugenol in an amount ranging from 1% to 30% by weight of the composition; *Pimpinella anisum* in an amount ranging from 1% to 25% by weight of the composition; Citral in an amount ranging from 1% to 30% by weight of the composition; and rest being an excipient.

The present disclosure further relates to a solid insecticide formulation for controlling crawling insects, said formulation comprising: *Pogostemon cablin* in an amount ranging from 1% to 25% by weight of the formulation; Eugenol in an amount ranging from 1% to 30% by weight of the formulation; *Pimpinella anisum* in an amount ranging from 1% to 25% by weight of the formulation; Citral in an amount ranging from 1% to 30% by weight of the formulation; and rest being an excipient.

The present disclosure still further relates to a liquid or a gaseous insecticide formulation for controlling crawling insects, said formulation comprising: *Pogostemon cablin* in an amount ranging from 1% to 25% by weight of the formulation; Eugenol in an amount ranging from 1% to 30% by weight of the formulation; *Pimpinella anisum* in an amount ranging from 1% to 25% by weight of the formulation; Citral in an amount ranging from 1% to 30% by weight of the formulation; and rest being an excipient.

The present disclosure also relates to a method for controlling crawling insects. The method for controlling crawling insects comprises, providing a composition comprising: *Pogostemon cablin* in an amount ranging from 1% to 25% by weight of the composition; Eugenol in an amount ranging from 1% to 30% by weight of the composition; *Pimpinella anisum* in an amount ranging from 1% to 25% by weight of the composition; Citral in an amount ranging from 1% to 30% by weight of the composition; and rest being an excipient.

### Detailed Description

The embodiments herein and the various features and advantageous details thereof are explained more comprehensively with reference to the non-limiting embodiments that are detailed in the following description. Descriptions of well-known components and processing techniques are omitted so as to not unnecessarily obscure the embodiments herein. The examples used herein are intended merely to facilitate an understanding of the ways in which the embodiments herein may be practiced and to further enable those of skill in the art to practice the embodiments herein. Accordingly, the examples should not be construed as limiting the scope of the embodiments herein.

Unless otherwise specified, all terms used in disclosing the invention, including technical and scientific terms, have the meaning as commonly understood by one of the ordinary skills in the art to which this invention belongs. By means of further guidance, term definitions may be included to better appreciate the teaching of the present invention.

As used in the description herein, the meaning of "a," "an," and "the" includes plural reference unless the context clearly dictates otherwise. Also, as used in the description herein, the meaning of "in" includes "in" and "on" unless the context clearly dictates otherwise.

As used herein, the terms "comprise", "comprises", "comprising", "include", "includes", and "including" are meant to be non-limiting, *i.e.*, other steps and other ingredients that do not affect the end of result can be added. The above terms encompass the terms "consisting of" and "consisting essentially of".

The terms "weight percent", "percent by weight", "% by weight", and variations thereof, as used herein, refer to the concentration of a substance as the weight of that substance divided by the total weight of the composition and multiplied by 100. It is understood that, as used here, "percent", "%", and the like are intended to be synonymous with "weight percent", etc.

The terms 'pest' and 'insect' are used synonymously and interchangeably throughout the specification. As used herein, the terms refer to any insect or small animal generally considered a pest due to its crawling behavior. Crawling pests or insects are those capable of infiltrating indoor environments, or outer areas, and are often difficult to eliminate. Non-limiting examples of such crawling pests include bed bugs, ants, cockroaches, beetles, spiders, crickets, centipedes, millipedes, pill bugs, whitefish, etc.

The term 'cockroach' or 'cockroaches' as used herein refers to each species of Cockroaches reported in the literature. It includes both male and female Cockroaches. The term further includes them in their different stages of life cycles, such as egg, nymph, and the adult stage.

The term 'controlling' as used herein refers to repelling, killing, preventing, and/or reducing the population of various crawling pest(s) and/or insect(s).

In some embodiments, the numbers expressing quantities of ingredients, properties such as concentration, reaction conditions, and so forth, used to describe and claim certain embodiments of the invention are to be understood as being modified in some instances by the term "about". Accordingly, in some embodiments, the numerical parameters set forth in the written description are approximations that can vary depending on the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values set forth in the specific examples are reported as precisely as practicable.

The recitation of ranges of values herein is merely intended to serve as a shorthand method of referring individually to each separate value falling within the range. Unless otherwise indicated herein, each individual value is incorporated into the specification as if it were individually recited herein.

The following discussion provides many example embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

The present disclosure addresses these and other unmet deficiencies inherent in the relevant insecticide arts and overcomes them by providing compositions/formulations that exhibit enhanced efficacy and economic significance.

The present disclosure is on the premise of a surprising discovery that when *Pogostemon cablin,* Eugenol, *Pimpinella anisum,* and Citral are included as part of an insecticide composition in the weight percentages as defined herein, they exhibit exceptional functional reciprocity and synergistic activity, and affords dramatic improvement in controlling the population of crawling insects as compared to the individual ingredients. The observed synergistic effect is unexpected and surprising. It further provides economic significance by reducing the amount of each active agent.

The present disclosure relates to an insecticide composition for controlling crawling insects, said composition comprising: *Pogostemon cablin* in an amount ranging from 1% to 25% by weight of the composition; Eugenol in an amount ranging from 1% to 30% by weight of the composition; *Pimpinella anisum* in an amount ranging from 1% to 25% by weight of the composition; Citral in an amount ranging from 1% to 30% by weight of the composition; and rest being an excipient.

In some embodiments, the insecticide composition includes *Pogostemon cablin* in an amount ranging from about 1% to about 25% by weight, including 1.5% to 22%, 1% to 20%, 2% to 15%, 3% to 12%, 3% to 10%, or 4% to 10%.

In some embodiments, the insecticide composition includes Eugenol in an amount ranging from about 1% to about 25% by weight, including 1.5% to 22%, 1% to 20%, 2% to 15%, 3% to 12%, 3% to 10%, or 4% to 10%.

In some embodiments, the insecticide composition includes *Pimpinella anisum* in an amount ranging from about 1% to about 25% by weight, including 1.5% to 22%, 1% to 20%, 2% to 15%, 3% to 12%, 3% to 10%, or 4% to 10%.

In some embodiments, the insecticide composition includes Citral in an amount ranging from about 1% to about 25% by weight, including 1.5% to 22%, 1% to 20%, 2% to 15%, 3% to 12%, 3% to 10%, or 4% to 10%.

In some embodiments, the composition comprises: whole of or a part of or an extract of, or an oil of *Pogostemon cablin.* In some embodiments, the composition comprises root, leaves, twigs, flowers, seeds, or a combination thereof of *Pogostemon cablin.* In some embodiments, the composition comprises leaves or twigs of *Pogostemon cablin.* In some embodiments, the composition comprises oil of *Pogostemon cablin.* In some embodiments, the composition comprises leaf oil of *Pogostemon cablin. Pogostemon cablin*, its active constituents, or a composition containing the same can also be used.

In some embodiments, the composition comprises a whole of or a part of or an extract of, or an oil of *Pimpinella anisum.* In some embodiments, the composition comprises roots, leaves, twigs, flowers, seeds, or a combination thereof of *Pimpinella anisum.* In some embodiments, the composition comprises leaves or twigs of *Pimpinella anisum.* In some embodiments, the composition comprises an oil of *Pimpinella anisum.* In some embodiments, the composition comprises seed oil of *Pimpinella anisum. Pimpinella anisum*, its active constituents, including, but not limited to, trans-anethole, estragole, methyl chavicol, and p-anisaldehyde, or a composition containing the same, can also be used.

In some embodiments, the composition of the present disclosure aids in repelling, killing, preventing, and/or reducing various crawling insects.

In some embodiments, the insect is selected from the group comprising of: bed bugs, ants, cockroaches, beetles, spiders, crickets, centipedes, millipedes, pill bugs, or whitefish.

In some embodiments, the insect is a cockroach.

In some embodiments, the excipient is selected from any or a combination of a phagostimulant, an attractant, a filler, a perfume, a preservative, an adhesive, a binder, a solvent, a wetting agent, a solubilizer, a hardening agent, an emulsifier, a diluent, a lubricant, a colouring agent, a lower alcohol, anti-freezing agent, propellant, humectant, anti-caking agent, a protein source, and a neutralization base.

Exemplary phagostimulant(s) include, without limitation, carbohydrates such as fructose, arabinose, sorbitol, maltose, glucose, and lactose, and amino acids such as glycine, alanine, ornithine, phenylalanine, isoleucine and valine, ghee, sugar powder, milk powder, baking soda, onion powder, coco peanut butter, sorbital powder, inverted sugar, amaranth (Rajgira) powder, honey, and the like, or one or more combinations thereof. However, a person skilled in the art would appreciate that any other phagostimulant(s) can be utilized to serve the intended purpose.

Exemplary attractant(s) include, without limitation, pheromones, plant volatiles, flower oils, sugars, coco butter, onion powder, proteins, and the like, or one or more combinations thereof. However, a person skilled in the art would appreciate that any other attractant(s) can be utilized to serve the intended purpose.

Exemplary filler(s) or burnable base(s) or thickener(s) include, without limitation, Aerosil 200, Paraffin wax, sawdust powder, Joss (Jiggit powder), coconut shell powder, areca nut shell powder, wood powder, wood chips, wood fiber, wood charcoal, vegetable shell powders (for example, cocoa shell), peanut shell, fibrous waste (for example, rayon waste, cotton waste, waste paper, and mineral fibers), flour, cellulose powder, wheat flour, and the like, or one or more combinations thereof. However, a person skilled in the art would appreciate that any other filler(s) can be utilized to serve the intended purpose.

Exemplary perfume(s)/fragrance agent(s) include, without limitation, various naturally or commercially available orange oil, lemon oil, lavender oil, peppermint oil, eucalyptus oil, citronella oil, lime oil, yuzu oil, jasmine oil, cypress oil, green tea essential oil, limonene, α-pinene, linalool, geraniol, phenylethyl alcohol, amylcinnamic aldehyde, cuminaldehyde, benzyl acetate, Pure Soul MMN37683, Classic Guggul MMN37681, Lemony perfume (Lemon global), and the like, or one or more combinations thereof. However, a person skilled in the art would appreciate that any other perfume(s)/fragrance agent(s) can be utilized to serve the intended purpose.

Exemplary preservative(s) include, without limitation, sodium benzoate, potassium sorbate, phenoxyethanol, p-hydroxybenzoic acid esters, sorbic acid, benzoic acid, propionic acid or salts, Butylated Hydroxytoluene (BHT), Butyllated Hydroxy chloride (BHC), citric acid, sodium chloride, Citric anhydride, and the like, or one or more combinations thereof. However, a person skilled in the art would appreciate that any other preservative(s) can be utilized to serve the intended purpose.

Exemplary adhesive(s) include, without limitation, Joss (Jiggit powder), corn starch, wheat starch, potato starch, pea starch, Tamarind starch, and the like, or one or more combinations thereof. However, a person skilled in the art would appreciate that any other adhesive(s) can be utilized to serve the intended purpose.

Exemplary binder(s) include, without limitation, guar gum, xanthan gum, starch, for example, potato starch, maize starch, corn starch, tamarind seed powder, water, povidone, copovidone, kaolin, glue (any commercially available) and the like, or one or more combinations thereof. However, a person skilled in the art would appreciate that any other binder(s) can be utilized to serve the intended purpose.

Exemplary solvent(s) include, without limitation, hydrocarbons such as aliphatic hydrocarbon (C₅ to C₂₀ carbon atoms having branched and/or unbranched chains), aromatic hydrocarbon, and alicyclic hydrocarbon, diethyl phthalate, alcohols such as ethanol, isopropanol (isopropyl alcohol) and methanol, esters such as fatty acid ester, vegetable oils, animal oils, and water. Further, among the aliphatic hydrocarbons, a paraffinic hydrocarbon (linear or branched saturated hydrocarbon), *inter alia*, normal paraffin (n-paraffin) is preferably used. It further includes higher fatty acid esters and alcohols. It further includes D-80, D-100, or a mixture thereof in the required amount. Preferable examples of organic solvents include higher fatty acid esters and alcohols. The higher fatty acid ester preferably has 16 to 20 carbon atoms in total. Examples of such a higher fatty acid ester include isopropyl myristate, butyl myristate, hexyl laurate, isopropyl palmitate, and combinations thereof. However, a person skilled in the art would appreciate that any other solvent(s) can be utilized to serve the intended purpose.

Exemplary wetting agent(s) include, without limitation, 1,2-propylene glycol, glycerol, hyaluronate sodium, and the like, or one or more combinations thereof. However, a person skilled in the art would appreciate that any other wetting agent(s) can be utilized to serve the intended purpose.

Exemplary solubilizer(s) include, without limitation, isomeryl alcohol APEO, PEG-40 PEG-60, polysorbate 20, the Tween 80, and the like, or one or more combinations thereof. However, a person skilled in the art would appreciate that any other solubilizer(s) can be utilized to serve the intended purpose.

Exemplary hardening agent(s) include, without limitation, water-miscible sylvite, sodium salt, magnesium salts, calcium salt, and the like, or one or more combinations thereof. However, a person skilled in the art would appreciate that any other hardening agent(s) can be utilized to serve the intended purpose.

Exemplary emulsifier(s) include, without limitation, hydrogenated lecithin, C12-16 Alcohols, palmitic acid (e.g., Biophillic^{™} H) and cetyl alcohol, glyceryl stearate, PEG-75 stearate, ceteth-20, steareth-2 (Emulium^{®} Delta), Tween (Tween 20, Tween 40, Tween 60 and Tween 80), Atlas G-50002L- LQ (CQ), Atlox 4913- LQ (MV), carboxymethyl cellulose, and the like, or one or more combinations thereof. However, a person skilled in the art would appreciate that any other emulsifier(s) can be utilized to serve the intended purpose.

Exemplary diluent(s) include, without limitation, microfine cellulose, lactose, starch, pregelatinized starch, calcium carbonate, calcium sulphate, sugar, dextrates, dextrin, dextrose, dibasic calcium phosphate dihydrate, tribasic calcium phosphate, kaolin, magnesium carbonate, magnesium oxide, maltodextrin, mannitol, potassium chloride, powdered cellulose, sodium chloride, sorbitol, talc, silicon oil, and the like, or one or more combinations thereof. However, a person skilled in the art would appreciate that any other diluent(s) can be utilized to serve the intended purpose.

Exemplary lubricant(s) include, without limitation, zinc stearate, magnesium stearate, stearic acid, calcium stearate, Vegetable stearin, and the like, or one or more combinations thereof. However, a person skilled in the art would appreciate that any other lubricant(s) can be utilized to serve the intended purpose.

Exemplary colouring agent(s) include, without limitation, E102 Tartrazine, E104 Quinoline Yellow, E110 Sunset Yellow FCF, E120 - Cochineal, carminic acid, Carmines, E122 Azorubine (Carmoisine), E123 Amaranth, E124 Ponceau 4R (Cochineal Red A), E127 Erythrosine, E129 Allura Red, E131 Patent Blue, and the like, or one or more combinations thereof. However, a person skilled in the art would appreciate that any other colouring agent(s) can be utilized to serve the intended purpose.

Exemplary lower alcohol(s) include, without limitation, ethanol, ethylene glycol, propane diols, glycerin, butanediol, and the like, or one or more combinations thereof. However, a person skilled in the art would appreciate that any other lower alcohol(s) can be utilized to serve the intended purpose.

Exemplary anti-freezing agent(s) include, without limitation, ethylene glycol, propane diols, glycerine or the urea, glycol (mono ethylene glycol, diethylene glycol, polypropylene glycol, Propylene glycol, polyethylene glycol), glycerine, urea, magnesium sulfate heptahydrate, sodium chloride and the like, or one or more combinations thereof. However, a person skilled in the art would appreciate that any other freezing agent(s) can be utilized to serve the intended purpose.

Exemplary propellant(s) include, without limitation, liquefied petroleum gas (LPG, Butane), dimethyl ether (DME), nitrogen gas, carbonic acid gas, nitrous oxide, compressed air, and the like, or one or more combinations thereof. However, a person skilled in the art would appreciate that any other propellant(s) can be utilized to serve the intended purpose.

Exemplary humectant(s) include, without limitation, glycerine, glycerol, propylene glycol, butylene glycol, aloe vera gel, hexylene glycol, glyceryl triacetate, sodium hyaluronate, and combinations thereof. However, a person skilled in the art would appreciate that any other humectant(s) can be utilized to serve the intended purpose.

Exemplary anti-caking agent(s) include, without limitation, Calcium carbonate and carbonates, Calcium hydrogen carbonate, Calcium phosphate, Monocalcium orthophosphate, Dicaclium orthophosphate, Tricalcium orthophosphate, Magnesium phosphate, Monomagnesium phosphate, Dimagnesium orthophosphate, Trimagnesium orthophosphate, Ferric ammonium citrate, Mannitol, Cellulose, Microcrystalline cellulose, Powdered cellulose, Sodium carbonate and carbonates, Sodium hydrogen carbonate. Sodium sesquicarbonate, Magnesium carbonate, Magnesium hydrogen carbonate, Magnesium oxide, Sodium ferrocyanide, Potassium ferrocyanide, Ferrous hexacyanomanganate, Calcium ferrocyanide, Bone phosphate, Sodium silicate and silicates, Sodium metasilicate, Silicon dioxide, Fused silica, Calcium silicate, Magnesium silicate. Magnesium trisilicate, Talc, Sodium aluminosilicate, Calcium aluminium silicate, Potassium aluminium silicate, Zinc silicate, Bentotine, Aluminium silicate, Potassium silicate, Polydimethylpolysiloxane, Isomalt (isomaltitol), and the like, and combinations thereof. However, a person skilled in the art would appreciate that any other anti-caking agent(s) can be utilized to serve the intended purpose.

Exemplary protein source(s) include, without limitation, egg yolk. However, a person skilled in the art would appreciate that any other protein source(s) can be utilized to serve the intended purpose.

Exemplary neutralization base(s) include, without limitation, triethanolamine. However, a person skilled in the art would appreciate that any other neutralization base(s) can be utilized to serve the intended purpose.

While one or more embodiments of the present disclosure enumerates and describes a list of excipients that may be used in the composition to serve an intended purpose, it should be appreciated that one or more excipient(s) may also serve more than one function, obviating the need of inclusion of separate excipients for the specified purpose. Although several embodiments of the present disclosure name a few of the commonly used excipients, any other excipient(s) known to or appreciated by a skilled person can also be used to realize the advantageous compositions of the present disclosure.

In some embodiments, the composition is formulated into a liquid form, a semi-solid form, a solid form, a gel, or a gaseous form.

In some embodiments, the composition is formulated into a cream, a lotion, an ointment, a gel, a spray, a vaporizer, a paste, a mist, a liquid vaporizer, an aerosol, an emulsion, a suspension, a micro-emulsion, a varnish dispersion, a fumigant, or a solution.

In some embodiments, the composition is formulated into a cream, a lotion, an ointment, a gel, a spray, a vaporizer, a paste, a powder, a dust, a wax, a chalk, granules, tablet, pellets, a burn paper, a coil, an incense stick, pellets, a bait, cordages, a candle, a sealing agent, a caulk, a patch, a mat, a filler, a wood filler, a liquid vaporizer, an aerosol, an emulsion, a suspension, a micro-emulsion, a varnish dispersion, a fumigant, or a solution.

Another aspect of the present disclosure relates to a solid insecticide formulation for controlling crawling insects, said formulation comprising: *Pogostemon cablin* in an amount ranging from 1% to 25% by weight of the formulation; Eugenol in an amount ranging from 1% to 30% by weight of the formulation; *Pimpinella anisum* in an amount ranging from 1% to 25% by weight of the formulation; Citral in an amount ranging from 1% to 30% by weight of the formulation; and rest being an excipient.

In some embodiments, the formulation comprises: a granule, a paste, a powder, a tablet, a dust, a wax, a chalk, pellets, a burn paper, a coil, an incense stick, pellets, a bait, cordages, a candle, a sealing agent, a caulk, a patch, a mat, a filler, a wood filler, a self-ignite formulation, or a vaporizer.

The present disclosure still further relates to a liquid or a gaseous insecticide formulation for controlling crawling insects, said formulation comprising: *Pogostemon cablin* in an amount ranging from 1% to 25% by weight of the formulation; Eugenol in an amount ranging from 1% to 30% by weight of the formulation; *Pimpinella anisum* in an amount ranging from 1% to 25% by weight of the formulation; Citral in an amount ranging from 1% to 30% by weight of the formulation; and rest being an excipient.

In some embodiments, the formulation comprises a cream, a lotion, an ointment, a gel, a spray, a vaporizer, a paste, a mist, a liquid vaporizer, an aerosol, an emulsion, a suspension, a micro-emulsion, a varnish dispersion, a fumigant, or a solution.

The present disclosure also relates to a method for controlling crawling insects comprising, providing an insecticide composition comprising: *Pogostemon cablin* in an amount ranging from 1% to 25% by weight of the composition; Eugenol in an amount ranging from 1% to 30% by weight of the composition; *Pimpinella anisum* in an amount ranging from 1% to 25% by weight of the composition; Citral in an amount ranging from 1% to 30% by weight of the composition; and rest being an excipient.

*Pogostemon cablin* (Patchouli) is a species of flowering plant in the family Lamiaceae, commonly called the mint or deadnettle family. The plant grows as a bushy perennial herb, with erect stems reaching up to 75 centimetres (2.5 ft) in height and bearing small, pale pink-white flowers. It is commonly known as Patchouli. It is native to the island region of Southeast Asia, including Sri Lanka, Indonesia, and the Philippines. It is also found in many parts of North East India.

*Pimpinella anisum* (commonly known as Anise), is an annual herb of the parsley family (Apiaceae), cultivated chiefly for its fruits, called aniseed, the flavor of which resembles that of licorice. Native to Egypt and the eastern Mediterranean region, anise is cultivated in southern Europe, southern Russia, the Middle East, North Africa, Pakistan, China, Chile, Mexico, and the United States.

In accordance with an embodiment, the composition of the present disclosure is formulated using extracts, oils, or any parts of plants, which are commercially procured.

The compositions and formulations of the present disclosure can be manufactured by any conventional method, known to or appreciated by a person skilled in the art working in the pertinent field to serve the intended purpose.

In some embodiments, the compositions or formulations of the present disclosure may be applied using any conventional means, such as a traditional spray machine, crimped pressurized cans, mist sprayers, or nano-disinfectant fogger guns. These application methods effectively deliver the formulation, producing the desired efficacy.

The ingredients of the composition of the present disclosure exhibit functional reciprocity therebetween, and accordingly, aid in repelling, killing, preventing, and/or reducing the population of indoor as well as outdoor crawling insects. Compositions/formulations of the present disclosure also exhibit superior storage stability. The composition/formulations are safe and have a good aroma effect.

### Example

The disclosure will now be illustrated with working examples, which are intended to illustrate the working of disclosure and not intended to restrictively imply any limitations on the scope of the present disclosure. Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices, and materials are described herein. It is to be understood that this disclosure is not limited to particular methods, and experimental conditions described, as such methods and conditions may vary.

### LIQUID SPARY FORMULATION (DELIVERED THROUGH NO-GAS SPRAY VALVE AND ACTUATOR):

**TABLE 1: Liquid spray formulations and bio-efficacy thereof**

| **Ingredients** | **Role** | **Formulations (in %w/w)** | | | | | |
|---|---|---|---|---|---|---|---|
| | | **F1** | **F2** | **F3** | **F4** | **F5** | **F6** |
| *Pogostemon cablin* (Patchouli) | Active agent | 21 | -- | -- | -- | 5 | 5 |
| Eugenol | Active agent | -- | 21 | -- | -- | 5 | 2.5 |
| *Pimpinella anisum* (Anise) | Active agent | -- | -- | 21 | -- | 5 | 2.5 |
| Citral | Active agent | -- | -- | -- | 21 | 5 | 5 |
| Butylated Hydroxytoluene (BHT) | Preservative | 1 | 1 | 1 | 1 | 1 | 1 |
| Perfume (Lemon global)) | Fragrance | 1 | 1 | 1 | 1 | 1 | 1 |
| Isopropyl alcohol | Solvent | 77 | 77 | 77 | 77 | 78 | 83 |
| Total | | 100 | 100 | 100 | 100 | 100 | 100 |
| **Bio-efficacy against American Cockroaches - KT50 (Min)** | | 21 | 57 | 48 | 23 | 15 | 17 |
| **Bio-efficacy against German Cockroaches - KT50 (Min)** | | 47 | 19 | 15 | 57 | 10 | 16 |

As can be seen in **Table 1** above, the formulations of the present disclosure (F5 and F6) afford improved control of cockroaches as compared to the formulations of the individual active agents (F1 to F4), and further reduce the amount of each of the active agents. Accordingly, it can be concluded that the composition/ formulation of the present disclosure offers significant efficacy in controlling various indoor and outdoor insects/pests as compared to the compositions/ formulations of the individual active agent(s).

### METHOD OF PREPARATION OF LIQUID SPARY FORMULATION:

The above formulations were prepared by taking all the ingredients in wt% as disclosed in Table 1 above. Isopropyl alcohol was taken in a vessel, and the active agent(s) (*Pogostemon cablin*, Eugenol, *Pimpinella anisum,* Citral), Lemon global, and BHT were added to the vessel containing isopropyl alcohol one after another under continuous stirring to obtain the final no-gas formulation. The final formulation was filled into conventional DITAT spray bottle and dispensed using a trigger spray mechanism, and was used for bio-efficacy studies (cockroach control).

### EXPERIMENTAL SETUP FOR LIQUID SPARY FORMULATION EFFICACY STUDY:

The bio-efficacy protocol described in the present disclosure is adapted, with modifications, from the United States Environmental Protection Agency (US-EPA) guideline OCSPP 810.3500: *Premises Treatments Protocol.* The assay system consisted of a piece of polyvinyl chloride (PVC) pipe with a diameter of 15.5 cm and a height of 12.5 cm, with both ends left open. The assay unit was placed on a glass panel, and a 5 cm wide silicone band was applied around the distal edge to prevent the escape of cockroaches. Each assay unit contained 5 American cockroaches (*Periplaneta americana*) and 10 German cockroaches (*Blattella germanica*)*.* The experiment was conducted in triplicate. Approximately 0.3 g of each test formulation (F1, F2, F3, F4, F5, and F6) was sprayed vertically from a height of about 30 cm above the glass surface. After five minutes, the exposed cockroaches were transferred to clean containers. Knock-down observations were recorded at 5-minute intervals over a total period of 60 minutes. The KT₅₀ (knock-down time for 50% of the population) was calculated for each formulation.

### AEROSOL SPRAY FORMULATION:

**TABLE 2: Aerosol spray formulations and bio-efficacy thereof**

| **Ingredients** | **Role** | **Formulations (in %w/w)** | | | | | |
|---|---|---|---|---|---|---|---|
| | | **F1** | **F2** | **F3** | **F4** | **F5** | **F6** |
| *Pogostemon cablin* (Patchouli) | Active agent | 21 | -- | -- | -- | 5 | 5 |
| Eugenol | Active agent | -- | 21 | -- | -- | 5 | 2.5 |
| *Pimpinella anisum* (Anise) | Active agent | -- | -- | 21 | -- | 5 | 2.5 |
| Citral | Active agent | -- | -- | -- | 21 | 5 | 5 |
| Butylated Hydroxytoluene (BHT) | Preservative | 1 | 1 | 1 | 1 | 1 | 1 |
| Perfume (Lemon global)) | Fragrance | 1 | 1 | 1 | 1 | 1 | 1 |
| Butane (liquefied petroleum gas) | Propellant | 77 | 77 | 77 | 77 | 78 | 83 |
| Total | | 100 | 100 | 100 | 100 | 100 | 100 |
| **Bio-efficacy against American Cockroaches** - **KT50 (Min)** | | 20 | 48 | 42 | 21 | 16 | 18 |
| **Bio-efficacy against German Cockroaches** - **KT50 (Min)** | | 45 | 21 | 16 | 49 | 12 | 14 |

As can be seen in +**Table 2** above, the formulations of the present disclosure (F5 and F6) afford improved control of cockroaches as compared to the formulations of the individual active agents (F1 to F4), and further reduce the amount of each of the active agents. Accordingly, it can be concluded that the composition/ formulation of the present disclosure offers significant efficacy in controlling various indoor and outdoor insects/pests as compared to the compositions/ formulations of the individual active agent(s).

### METHOD OF PREPARATION OF AEROSOL SPRAY FORMULATION:

All the ingredients were accurately weighed as per Table 2 and thoroughly mixed (excluding the propellant) to form a blend in a beaker. The blend was then transferred into a commercially available aerosol tin. A valve was inserted into the tin and crimped to seal it, forming a crimped tin. The specified amount of propellant was subsequently added to the crimped tin to obtain the final aerosol formulation, which was used for the above efficacy testing.

### EXPERIMENTAL SETUP FOR AEROSOL SPRAY FORMULATION EFFICACY STUDY:

Five German cockroaches were placed in a 1000 mL glass beaker. The beaker was temporarily mounted horizontally on a stand consisting of a rigid rod (typically aluminum or mild steel) screwed perpendicularly into a base. A boss-head was used to connect the clamp to the stand, allowing it to securely hold the beaker in place. The mouth of the beaker was covered with a mesh net. The experiment was conducted in four replicates. The aerosol formulation was sprayed for 2 seconds from a distance of 30 cm, directed toward the mesh-covered opening. After a two-minute exposure, the cockroaches were transferred to clean containers. Knock-down and mortality observations were recorded for up to 96 hours.

Without further elaboration, it is believed that one skilled in the art can, using the description herein, utilize the present invention to its fullest extent. The embodiments described herein are to be construed as illustrative and not as constraining the remainder of the disclosure in any way whatsoever. While the preferred embodiments of the invention have been shown and described, many variations and modifications thereof can be made by one skilled in the art without departing from the spirit and teachings of the invention. Accordingly, the scope of protection is not limited by the description set out above but is only limited by the claims, including all equivalents of the subject matter of the claims. The disclosures of all patents, patent applications, and publications cited herein are hereby incorporated herein by reference, to the extent that they provide procedural or other details consistent with and supplementary to those set forth herein.

### Advantages

The present disclosure provides insecticide compositions/formulations that overcome the limitations associated with conventional compositions/formulations.

The present disclosure provides insecticide compositions/formulations for repelling and/or reducing and/or controlling various crawling insects.

The present disclosure provides insecticide compositions/formulations for repelling and/or reducing and/or controlling the population of cockroaches.

The present disclosure provides insecticide compositions/formulations that exhibit high repellence and insecticide activity.

The present disclosure provides insecticide compositions/formulations that are safe.

The present disclosure provides insecticide compositions/formulations that exhibit synergistic activity /functional reciprocity and are economical and easy to prepare.

## Claims

1. An insecticide composition for controlling crawling insects, said composition comprising:
*Pogostemon cablin* in an amount ranging from 1% to 25% by weight of the composition;
Eugenol in an amount ranging from 1% to 30% by weight of the composition;
*Pimpinella anisum* in an amount ranging from 1% to 25% by weight of the composition;
Citral in an amount ranging from 1% to 30% by weight of the composition; and
rest being an excipient.

2. The composition as claimed in claim 1, wherein the excipient is selected from any or a combination of a phagostimulant, an attractant, a filler, a perfume, a preservative, an adhesive, a binder, a solvent, a wetting agent, a solubilizer, a hardening agent, an emulsifier, a diluent, a lubricant, a colouring agent, a lower alcohol, anti-freezing agent, propellant, humectant, anti-caking agent, a protein source, and a neutralization base.

3. The composition as claimed in claim 1, wherein the insect is selected from the group comprising of: bed bugs, ants, cockroaches, beetles, spiders, crickets, centipedes, or whitefish.

4. The composition as claimed in claim 1, wherein the composition is formulated into a liquid form, a semi-solid form, a solid form, a gel, or a gaseous form.

5. A solid insecticide formulation for controlling crawling insects, said formulation comprising:
*Pogostemon cablin* in an amount ranging from 1% to 25% by weight of the formulation;
Eugenol in an amount ranging from 1% to 30% by weight of the formulation;
*Pimpinella anisum* in an amount ranging from 1% to 25% by weight of the formulation;
Citral in an amount ranging from 1% to 30% by weight of the formulation; and
rest being an excipient.

6. The formulation as claimed in claim 5, wherein the formulation comprises a granule, a paste, a powder, a dust, a wax, a chalk, granules, tablet, pellets, a burn paper, a coil, an incense stick, pellets, a bait, cordages, a candle, a sealing agent, a caulk, a patch, a mat, a filler, a wood filler, a self-ignite formulation, or a vaporizer.

7. A liquid or a gaseous insecticide formulation for controlling crawling insects, said formulation comprising:
*Pogostemon cablin* in an amount ranging from 1% to 25% by weight of the formulation;
Eugenol in an amount ranging from 1% to 30% by weight of the formulation;
*Pimpinella anisum* in an amount ranging from 1% to 25% by weight of the formulation;
Citral in an amount ranging from 1% to 30% by weight of the formulation; and
rest being an excipient.

8. The formulation as claimed in claim 7, wherein the formulation comprises a cream, a lotion, an ointment, a gel, a spray, a vaporizer, a paste, a mist, a liquid vaporizer, an aerosol, an emulsion, a suspension, a micro-emulsion, a varnish dispersion, a fumigant, or a solution.

9. A method for controlling crawling insects comprising, providing an insecticide composition comprising:
*Pogostemon cablin* in an amount ranging from 1% to 25% by weight of the composition;
Eugenol in an amount ranging from 1% to 30% by weight of the composition;
*Pimpinella anisum* in an amount ranging from 1% to 25% by weight of the composition;
Citral in an amount ranging from 1% to 30% by weight of the composition; and
rest being an excipient.

## Amended claims

### Amended claims in accordance with Rule 137(2) EPC.

1. An insecticide composition comprising:
*Pogostemon cablin* in an amount ranging from 1% to 25% by weight of the composition;
Eugenol in an amount ranging from 1% to 30% by weight of the composition;
*Pimpinella anisum* in an amount ranging from 1% to 25% by weight of the composition;
Citral in an amount ranging from 1% to 30% by weight of the composition; and
remainder being one or more excipients to make 100% of the composition.

2. The composition as claimed in claim 1, wherein the one or more excipients are selected from one or more of a phagostimulant, an attractant, a filler, a perfume, a preservative, an adhesive, a binder, a solvent, a wetting agent, a solubilizer, a hardening agent, an emulsifier, a diluent, a lubricant, a colouring agent, anti-freezing agent, propellant, humectant, anti-caking agent, a protein source, and a neutralization base.

3. The composition as claimed in claim 1, wherein the composition is formulated into a liquid form, a semi-solid form, a solid form, or a gel form.

4. A solid insecticide formulation comprising the composition as claimed in claim 1.

5. The formulation as claimed in claim 4, wherein the formulation comprises a granule, a paste, a powder, a dust, a wax, a chalk, tablet, a burn paper, a coil, an incense stick, pellets, a bait, cordages, a candle, a sealing agent, a caulk, a patch, a mat, a filler, a wood filler, or a self-ignite formulation.

6. A liquid or an aerosol spray insecticide formulation comprising the composition as claimed in claim 1, wherein the one or more excipients are selected from a preservative, a solvent, a perfume, and a propellant.

7. The formulation as claimed in claim 6, wherein the formulation comprises a cream, a lotion, an ointment, a gel, a spray, a paste, a mist, a liquid vaporizer, an aerosol, an emulsion, a suspension, a micro-emulsion, a varnish dispersion, a fumigant, or a solution.

8. A non-therapeutic method for controlling insects, comprising applying the composition as claimed in claim 1 to an insect or to a locus thereof.
